# EUROPEAN PATENT APPLICATION

(11) **EP 4 450 156 A1**
(43) Date of publication of application: **23.10.2024**
(21) Application number: 23752462.4
(22) Date of filing: 13.02.2023
(51) Int. Cl.: B01J 23/10, B01J 35/10, B01D 53/86, B01D 53/94, B01D 53/38

(54) **GRAIN BOUNDARY AND SURFACE-DOPED CERIUM-ZIRCONIUM COMPOSITE OXIDE AND PREPARATION METHOD THEREFOR AND APPLICATION THEREOF**

(30) Priority: 14.02.2022 CN 202210135450
(71) Applicant: Grirem Advanced Materials Co., Ltd., Beijing 100088 (CN); Grirem Hi-Tech Co., Ltd., Langfang, Hebei 065201 (CN); Rare Earth Functional Materials (Xiong'An) Innovation Center Co., Ltd., Baoding, Hebei 071700 (CN)
(72) Inventor: HUANG, Xiaowei, Beijing 100088 (CN); CUI, Meisheng, Beijing 100088 (CN); HOU, Yongke, Beijing 100088 (CN); ZHANG, Yongqi, Beijing 100088 (CN); FENG, Zongyu, Beijing 100088 (CN); YANG, Juanyu, Beijing 100088 (CN); XU, Zihao, Beijing 100088 (CN)
(74) Representative: Huang, Liwei
(86) International application number: PCT/CN2023/075754
(87) International publication number: WO 2023/151684

(57) **Abstract**

The invention relates to a cerium-zirconium composite oxide which is doped at surface and at grain boundary and a preparation method and use thereof. Some of all of doping elements of the cerium-zirconium composite oxide are located at the grain boundary and the surface of the cerium-zirconium composite oxide, so that the number of defects and vacancies of the cerium-zirconium composite oxide is increased, oxygen migration capability is increased, and good high-temperature stability is achieved. The cerium-zirconium composite oxide can inhibit the migration, agglomeration and growth of noble metal particles, enhance the high-temperature stability of a noble metal catalyst, reduce the consumption of noble metal, and can be applied to the fields of motor vehicle exhaust purification, natural gas catalytic combustion, organic waste gas purification, industrial flue gas denitrification treatment and the like.

## Description

### Cross-reference

This application is based on Chinese patent application No.202210135450. 6, filed on February 14, 2022, and claims the priority of this Chinese patent application, the entire contents of which are incorporated herein by reference.

### Technical Field

The invention relates to the technical field of cerium-zirconium composite oxides, in particular to a cerium-zirconium composite oxide which is doped at surface and at grain boundary, and a preparation method and use thereof.

### Background Art

With the continuous improvement of emission standards for vehicle exhaust, industrial waste gas and flue gas at home and abroad, the performance requirements for vehicle exhaust purification catalysts, industrial waste gas and flue gas treatment catalysts are also getting higher and higher. As a flow pollution source, the components and properties of vehicle exhaust continuously change during operation, making it difficult for ordinary catalysts to effectively purify vehicle exhaust; and therefore, an automobile exhaust purification catalyst, a motorcycle exhaust purification catalyst and the like containing precious metals such as platinum, palladium and rhodium are developed, and a key active coating material, i.e. cerium-zirconium composite oxide, is used in these catalysts. Cerium oxide in the cerium-zirconium composite oxide has valence state variability, and reversible changes of Ce⁴⁺ and Ce³⁺ occur in an oxidation or reduction atmosphere, so that the cerium-zirconium composite oxide has an oxygen storage and release function, which can effectively broaden the air-fuel ratio window of the catalysts, and greatly improve the catalytic performance of the automobile exhaust purification catalysts. Cerium-zirconium composite oxide can greatly reduce noble metal consumption in the catalyst due to the improvement of dispersion of the noble metal loaded on the catalyst and the improvement of utilization rate. Cerium-zirconium composite oxide is an essential key material of automobile exhaust purification catalyst. Because of the harsh environment in which the automobile exhaust purification catalyst is located, not only the temperature is relatively high, sometimes as high as more than 900°C, but also contains a certain amount of water vapor, the catalyst needs to have high temperature resistance, and the cerium-zirconium composite oxide needs not only high specific surface area, but also good high temperature stability. In addition, the cerium-zirconium composite oxide also has a broad application prospect in catalysts such as natural gas catalytic combustion, industrial organic waste gas treatment, industrial flue gas denitrification and the like.

Under the high temperature of automobile exhaust, the structure of cerium-zirconium composite oxide changes, the specific surface area decreases continuously, and the performance will deteriorate, especially high temperature stability of cerium-zirconium composite oxide needs to be improved to meet the increasing and more stringent automobile exhaust emission standards. In addition, for the application of cerium-zirconium composite oxide in the automobile exhaust purification catalyst, platinum, palladium, and rhodium noble metal particles loaded on cerium-zirconium composite oxide are easy to migrate, agglomerate, and grow up under the deterioration of high-temperature exhaust gas for a long time, thereby causing deactivation of the catalyst.

### Summary of the Invention

On the basis of the prior art, the invention aims to provide a cerium-zirconium composite oxide which is doped at surface and at grain boundary, and a preparation method and use thereof, which improves high-temperature stability, and increases oxygen vacancies, defects and the like. The catalyst prepared by using the cerium-zirconium composite oxide is beneficial to the efficient loading of noble metal particles and inhibits migration, agglomeration, and growth of the noble metal particles, thereby improving high-temperature stability of the catalyst.

To achieve the above object, in a first aspect of the invention, there is provided a cerium-zirconium composite oxide which is doped at surface and at grain boundary having a chemical formula of CeₓZr_{1-x-y}M_{y}O_{2-α}D_{δ}; wherein,
M is a cation doping element, and D is an anion doping element;
0.1≤x≤0.9, 0<y≤0.2, 0≤α≤0.1, 0≤δ≤0.1.

Further, the grain boundary and surface of the cerium-zirconium composite oxide contain an oxide of doping element M, or one or more of an oxide of doping element M, a nitrogen-containing compound, a fluoride, a phosphate, and a sulfate formed by M and D.

Further, the doping element M is one or a combination of more than one selected from rare earth elements except cerium, transition metal elements, alkaline earth metal elements, Al and Si; and the doping element D is one or a combination of more than one selected from N, S, F, and P.

Further, the rare earth element is one or a combination of more than one selected from La, Pr, Nd, Sm, Eu, Gd, Tb, Dy, Ho, Er, Tm, Yb, Lu, Y, and Sc; the transition metal element is one or a combination of more than one selected fromCu, Mn, Ni, Fe, Zn, Co, Ti, Hf, Cr, and W; and the alkaline earth metal element is one or a combination of more than one selected from Mg, Ca, Sr, and Ba.

Further, the cation doping element M comprises one or a combination of more than one selected from La, Pr, Nd, Sm, Eu, Yb, Y, Sc, Cu, Mn, Hf, Fe, Co, Al, Si, Mg, Ba, and Sr.

Further, the cerium-zirconium composite oxide has a specific surface area of greater than 50 m²/g, preferably greater than 60 m²/g, after heat preservation at 1000°C for 10 h, and a specific surface area of greater than 35 m²/g, preferably greater than 40 m²/g, after heat preservation at 1100°C for 4 h.

Further, the cerium-zirconium composite oxide has a total pore volume of greater than 0.4 mL/g, and a total pore volume of greater than 0.2 mL/g after heat preservation at 1000°C for 10 h.

Further, the cerium-zirconium composite oxide which is doped at surface and at grain boundary comprises an element gradient distribution structure or a core-shell structure; preferably, one or more of a structure in which cerium oxide is enriched on external surface or shell, or a structure in which doping element M is enriched on external surface, or a structure in which doping element M is on external surface or/and inner structure.

In a second aspect of the invention, there is provided a preparation method of the cerium-zirconium composite oxide which is doped at surface and at grain boundary as described in the first aspect of the invention, comprising the following steps:
S1, respectively preparing aqueous solutions containing cerium ion and zirconium ion in a stoichiometric ratio required by the product, and mixing the aqueous solutions to obtain a mixed feed liquid; carrying out one-step or two-step precipitation reaction on the mixed feed liquid and an alkaline substance in a reactor, and filtering, washing, drying, and roasting the obtained precipitate to obtain cerium-containing zirconium oxide; and
S2, mixing the cerium-containing zirconium oxide obtained in step S1 with liquid salts of doping elements M and D, drying, then carrying out heat treatment once or twice, and then roasting once or twice to obtain the cerium-zirconium composite oxide which is doped at surface and at grain boundary.

Further, the aqueous solution containing zirconium ion in step S1 comprises one or a combination of more than one selected from zirconium oxychloride, zirconium oxynitrate, zirconium sulfate, zirconium acetate, and zirconium citrate.

Further, the aqueous solution containing cerium ion in step S1 comprises one or a combination of more than one selected from cerium chloride, cerium nitrate, cerium sulfate, cerium acetate, and cerium citrate.

Further, the alkaline substance comprises at least one of magnesium bicarbonate, urea and hydroxide, carbonate, or bicarbonate of at least one element of ammonium, sodium, and potassium; preferably at least one of sodium hydroxide, urea, ammonia water, and ammonium bicarbonate.

Further, pH value in the precipitation process of the step S1 is controlled at 4.5-14, preferably 5-11; pH value at the end of precipitation is controlled at 8-13, preferably 9-11; and reaction temperature in the precipitation process is 0 to 120°C, preferably 20 to 80°C.

Further, the liquid salt of doping element M includes one or a combination of more than one selected from molten salt or aqueous solution of chloride, nitrate, sulfate, acetate, citrate, amino acid salt, and organic silicon compound.

Further, the doping element M is added in one or both of steps S1 and S2.

Further, the doping element D is added in one or both of steps S1 and S2.

Further, the doping element D is added by one or a combination of more than one selected fromnitrate, fluoride, phosphate, and sulfate.

Further, the roasting in step S1 is performed at a temperature of 500 to 1050°C for 1 to 24 h; preferably, the roasting is performed at a temperature of 600 to 950°C for 3 to 12 h.

Further, the heat treatment in step S2 is performed at a temperature of 100 to 600°C for 0.5 to 24 h; preferably, the heat treatment is performed at a temperature of 150 to 450°C for 1 to 12 h.

Further, the roasting in step S2 is performed at a temperature of 500 to 1050°C for 1 to 24 h; preferably, the roasting is performed at a temperature of 600 to 950°C for 3 to 12 h.

In a third aspect of the invention, there is provided a catalyst, prepared using the cerium-zirconium composite oxide which is doped at surface and at grain boundary as described in the first aspect of the invention.

In a fourth aspect of the invention, there is provided use of the catalyst as described in the third aspect of the invention in the fields of motor vehicle exhaust purification, natural gas catalytic combustion, organic waste gas purification, and industrial flue gas denitrification treatment.

In summary, the invention provides a cerium-zirconium composite oxide which is doped at surface and at grain boundary and a preparation method and use thereof, so as to improve high-temperature stability and catalytic application effect of cerium-zirconium composite oxide. The grain boundary and surface of the cerium-zirconium composite oxide provided by the invention contain an oxide of doping element M, or a nitrogen-containing compound, a fluoride, a phosphate, a sulfate and the like formed by an oxide of doping element M and M and D; and the doping element M, or M and D is(are) located at the grain boundary and surface of the cerium-zirconium composite oxide. The interaction between the doping elements and the grains of cerium-zirconium composite oxide is enhanced, and the dopants at the grain boundary have the effects of dispersing, coating and the like on the cerium-zirconium grains, so that the cerium-zirconium composite oxide has good high-temperature stability. Meanwhile, the number of defects and vacancies of the cerium-zirconium composite oxide is increased, and the oxygen migration capability is enhanced, which can effectively improve the catalytic activity of the catalyst, and reduce the noble metal consumption of the catalyst. In addition, the cerium-zirconium composite oxide can inhibit migration, agglomeration, and growth of noble metal particles, enhances the high-temperature stability of a noble metal catalyst, and can be applied to the fields of motor vehicle tail gas purification, natural gas catalytic combustion, organic waste gas purification, industrial flue gas denitrification treatment and the like.

Compared with the prior art, the invention has the following beneficial effects:
(1) For the cerium-zirconium composite oxide which is doped at surface and at grain boundary provided by examples of the invention, the grain boundary and surface contain an oxide of doping element M, or a nitrogen-containing compound, a fluoride, a phosphate, a sulfate and the like formed by an oxide of doping element M and M and D; the doping element M, or M and D is(are) located at the grain boundary and surface of the cerium-zirconium composite oxide. The cerium-zirconium composite oxide has rich defects and vacancies, particularly rich defects at grain boundary, so that the interaction between doping elements and grains is enhanced, and the dopants at the grain boundary have the effects of dispersing, coating and the like on the cerium-zirconium grains, so that high-temperature stability of the cerium-zirconium composite oxide is improved.
(2) For the cerium-zirconium composite oxide which is doped at surface and at grain boundary provided by examples of the invention, doping on the grain boundary and surface, especially on the grain boundary, makes the cerium-zirconium composite oxide have abundant grain defects, thereby improving the activity of the dopant, improving the effective utilization rate of the dopant, and promoting the catalytic effect of the dopant.
(3) The catalyst prepared by loading noble metal such as platinum, palladium, rhodium and the like with the cerium-zirconium composite oxide which is doped at surface and at grain boundary of the invention is more beneficial to the efficient dispersion and loading of noble metal catalytic particle such as platinum, palladium, rhodium and the like and has more defect sites, compared with the conventional cerium-zirconium composite oxide, because the cerium-zirconium composite oxide of the invention has abundant defects and the dopant has high activity and abundant defect sites, thereby effectively improving the catalytic activity of the catalyst, reducing the noble metal consumption of the catalyst. In addition, the noble metal particles are preferentially combined with the dopant at the grain boundary, and there is a strong interaction between them, so that the migration, agglomeration, growth and the like of the noble metal catalytic particles at high temperature are inhibited, thus improving high-temperature stability of the catalyst.

### Brief Description of the Drawings

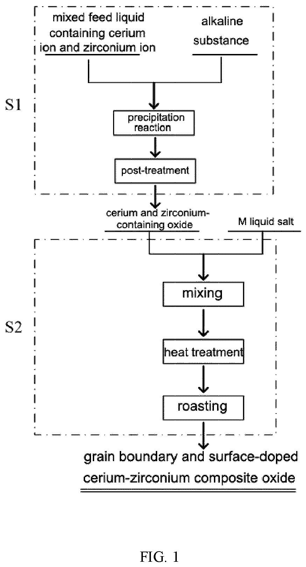

FIG. 1 is a flow chart for the preparation of the cerium-zirconium composite oxide which is doped at surface and at grain boundary of the invention.

### Detailed Description of the Invention

In order to make the purpose, technical solution, and advantages of the invention more clearly understood, the invention will be further described in detail with reference to the following detailed description of the invention and the accompanying drawings. It should be understood that these descriptions are exemplary only and are not intended to limit the scope of the invention. In addition, in the following description, descriptions of well-known structures and techniques are omitted to avoid unnecessarily obscuring the concepts of the invention.

In a first aspect of the invention, there is provided a grain boundary and surfaced-oped cerium-zirconium composite oxide having a chemical formula of CeₓZr_{1-x-y}M_{y}O₂₋ₐD_{δ}, M is a cation doping element, D is an anion doping element, and 0.1≤x≤0.9, 0<y<0.2, 0≤α≤0.1, 0≤δ≤0.1; preferably, 0.01≤δ≤0.08.

The grain boundary and the surface of the cerium-zirconium composite oxide contain an oxide of doping element M, or one or more of an oxide of doping element M, a nitrogen-containing compound, a fluoride, a phosphate, and a sulfate formed by M and D. The doping element M, or M and D is(are) located at the grain boundary and surface of the cerium-zirconium composite oxide, and exist in the form of one or more of oxide, nitrogen-containing compound, fluoride, phosphate, and sulfate.

Generally, grain boundary and surface doping makes the grain boundary and surface of the cerium-zirconium composite oxide contain an oxide of doping element M, or one or more of an oxide of doping element M, a nitrogen-containing compound, a fluoride, a phosphate, and a sulfate formed by M and D. Further, the doping element M, or M and D, is(are) located at the grain boundary and surface of the cerium-zirconium composite oxide, and exists in the form of one or more of oxide, nitrogen-containing compound, fluoride, phosphate, and sulfate. Further, the M element includes at least one of La, Pr, Nd, Y, Sc, Cu, Mn, Hf, Mg, Ba, and Sr at the grain boundary and surface of the cerium-zirconium composite oxide, and the molar ratio of the M element at the grain boundary and surface is 10% to 70%. The D element is preferably at least one of N and S at the grain boundary and surface, and the molar ratio of the D element at the grain boundary and surface is 10 to 70%. The morphology and proportion of M and D at the grain boundary and surface can be regulated and controlled by controlling precipitation parameters, heat treatment temperature of the product, roasting temperature, time, atmosphere and the like.

Doping at the grain boundary and surface is realized in the cerium-zirconium composite oxide, making the oxide rich in defect and vacancies, particularly the defects at the grain boundary are more abundant, the interaction between the doping element and grains is enhanced, and the dopant at the grain boundary can play roles of dispersing, coating and the like on the cerium-zirconium grains, thereby improving high-temperature stability of the cerium-zirconium composite oxide.

The doping element M is converted into an oxide at the grain boundary, surface and in the grain, or M and D are combined to form one or more of a nitrogen-containing compound, a fluoride, a phosphate, and a sulfate; preferably, the doping element M is converted into an oxide at the grain boundary and surface of the cerium-zirconium composite oxide, or/and M and D are combined to form one or more of a nitrogen-containing compound, a fluoride, a phosphate, and a sulfate; M forms an oxide, and D and M are combined to form a nitrogen-containing compound, a fluoride, a phosphate, a sulfate and the like, which can improve high-temperature stability of the cerium-zirconium composite oxide, and regulate pore structure or oxygen storage amount.

The doping element M can be one or a combination of more than one selected from rare earth elements except cerium, transition metal elements, alkaline-earth metal elements, Al and Si; wherein, the rare earth element may be one or a combination of more than one selected from La, Pr, Nd, Sm, Eu, Gd, Tb, Dy, Ho, Er, Tm, Yb, Lu, Y, and Sc, preferably, can be one or a combination of more than one selected from La, Pr, Nd, Sm, Eu, Yb, Y, and Sc; the transition metal element may be one or a combination of more than one selected from Cu, Mn, Ni, Fe, Zn, Co, Ti, Hf, Cr, and W; and the alkaline-earth metal element may be one or a combination of more than one selected from Mg, Ca, Sr, and Ba. Further preferably, the cation doping element M comprises one or a combination of more than one selected from La, Pr, Nd, Sm, Eu, Yb, Y, Sc, Cu, Mn, Hf, Fe, Co, Al, Si, Mg, Ba, and Sr. The doping element D may be one or a combination of more than one selected from N, S, F, and P, preferably N and S.

The specific surface area of the ceria-zirconia composite oxide after heat preservation at 1000°C for 10 h is greater than 50 m²/g, preferably greater than 60 m²/g, and the specific surface area after heat preservation at 1100°C for 4 h is greater than 35 m²/g, preferably greater than 40 m²/g. Further, the total pore volume of the cerium-zirconium composite oxide is greater than 0.4 mL/g, and the total pore volume of the cerium-zirconium composite oxide after heat preservation at 1000°C for 10 h is greater than 0.2 mL/g.

Further, the cerium-zirconium composite oxide which is doped at surface and at grain boundary comprises an element gradient distribution structure or a core-shell structure; preferably, one or more of a structure in which cerium oxide is enriched on the outer surface or shell, or a structure in which doping element M is enriched on the outer surface, or a structure in which doping element M is on the outer surface or/and the inner structure. This further improves high-temperature stability and the oxygen storage capacity of the cerium-zirconium composite oxide, and is beneficial to the dispersed loading of noble metal particles, improving catalytic activity, and reducing noble metal consumption. Additional features and advantages of the element gradient distribution structure of the cerium-zirconium composite oxide can be found in the Chinese patent application No. CN202010982979.2, entitled "Cerium-zirconium-based composite oxide with elements in gradient distribution and preparation method thereof", filed on September 17, 2020, and the entire content thereof. Additional features and advantages of the core-shell structure of the cerium-zirconium composite oxide can be found in the Chinese patent application No. CN202010982980.5, entitled " Cerium-zirconium-based composite oxide with core-shell structure, and preparation method thereof", filed on September 17, 2020, and the entire content thereof.

In a second aspect of the invention, there is provided a preparation method of the cerium-zirconium composite oxide which is doped at surface and at grain boundary as described in the first aspect of the invention, the flow chart of which is shown in FIG. 1, and the method comprises the following steps:
S1, respectively preparing aqueous solutions containing cerium ion and zirconium ion in a stoichiometric ratio required by the product, and mixing the aqueous solutions to obtain a mixed feed liquid; carrying out one-step or two-step precipitation reaction on the mixed feed liquid and an alkaline substance in a reactor, and filtering, washing, drying and roasting the obtained precipitate to obtain a cerium-containing zirconium oxide; and
S2, mixing the cerium-containing zirconium oxide obtained in step S1 with liquid salts of doping elements M and D, drying, then carrying out heat treatment once or twice, and then roasting once or twice to obtain the cerium-zirconium composite oxide which is doped at surface and at grain boundary.

The aqueous solution containing zirconium ion in step S1 may be one or a combination of more than one selected from zirconium oxychloride, zirconium oxynitrate, zirconium sulfate, zirconium acetate, and zirconium citrate; the aqueous solution containing cerium ion may be one or a combination of more than one selected from cerium chloride, cerium nitrate, cerium sulfate, cerium acetate, and cerium citrate; the alkaline substance may be at least one of magnesium bicarbonate, urea, and hydroxide, carbonate, or bicarbonate of at least one of ammonium, sodium, and potassium, preferably at least one of sodium hydroxide, urea, ammonia water, and ammonium bicarbonate. The pH value in the precipitation process of step S1 is controlled at 4.5-14, preferably 5-11; the pH value at the end of precipitation is control at 8-13, preferably 9-11; the reaction temperature in the precipitation process is 0-120°C, preferably 20-80°C; the roasting in step S1 is performed at a temperature of 500-1050°C for 1-24 h; preferably, the roasting is performed at a temperature of 600-950°C for 3-12 h.

The doping element M may be added in one or both of steps S1 and S2. For example, the doping element M can be added separately in steps S1 or S2 according to the required stoichiometry of the product, or a part of the doping element M can be added in step S1 and then another part can be added in step S2 according to the required stoichiometry of the product, and any one of the above addition methods can be selected according to actual needs. The molar ratio of M element at the grain boundary and surface of the cerium-zirconium composite oxide is 10-70 mol%. The liquid salt of doping element M may include one or a combination of more than one selected from molten salts or aqueous solutions of chloride, nitrate, sulfate, acetate, citrate, amino acid salt, and organosilicon compound.

The doping element D may also be added in one or both of steps S1 and S2, which is similar to the adding method of doping element M, and any adding method can be selected according to actual needs. The molar ratio of element D at the grain boundary and surface of the cerium-zirconium composite oxide is 10-70 mol%. Doping element D may be added by one or a combination of more than one selected from nitrate, fluoride, phosphate, and sulfate.

The heat treatment in step S2 is performed at a temperature of 100-600°C for 0.5-24 h; preferably, the heat treatment is performed at a temperature of 150-450°C for 1-12 h. Further, different heat treatment systems can be adopted, such as step-by step heat treatment, so that the doping elements can enter the grain boundary and surface more uniformly and stably.

The roasting in step S2 is performed at a temperature of 500-1050°C for 1-24 h; preferably, the roasting is performed at a temperature of 600-950 °C for 3-12 h. Further, two times of roasting can also be adopted, so that the particle size and dispersity of the cerium-zirconium composite oxide are effectively controlled, and the high-temperature stability of the cerium-zirconium composite oxide is further improved.

In the invention, the doping of doping elements M and D at the grain boundary and surface of the cerium-zirconium composite oxide can be obtained by solid-liquid mixing M and D with cerium-containing zirconium oxide in the form of ionic solution or liquid salt, drying, heat treatment, and roasting in step S1; or may be obtained by adding M and D in the form of ionic solution or liquid salt in both step S1 and step S2.

In a third aspect of the invention, there is provided a catalyst prepared using the cerium-zirconium composite oxide which is doped at surface and at grain boundary as described in the first aspect of the invention. The catalyst can be applied to the fields of motor vehicle exhaust purification, natural gas catalytic combustion, organic waste gas purification, industrial flue gas denitrification treatment and the like.

In a fourth aspect of the invention, there is provided use of the catalyst according to the third aspect of the invention in the fields of motor vehicle exhaust purification, natural gas catalytic combustion, organic waste gas purification, and industrial flue gas denitrification treatment.

The invention will be further illustrated by way of specific examples.

### Comparative Example 1

250 mL mixed feed liquid of CeCl₃, ZrOCl₂, LaCl₃, YCl₃ with a total metal ion molar concentration of 1.5 mol/L was prepared according to the molar ratio of cerium-zirconium composite oxide Ce_{0.50}Zr_{0.35}La_{0.10}Y_{0.05}O_{1.98}; the mixed feed liquid was mixed with 2.5 mol/L sodium hydroxide solution for precipitation reaction, the precipitation temperature was 25°C, the pH value in the precipitation process was controlled at 10±0.2, the pH value at the end of precipitation was 11, the precipitate was subjected to post-treatment such as filtering, washing and the like to obtain a precursor, and then the precursor was dried at 110°C for 10 h and roasted at 800°C for 5 h to obtain cerium-zirconium composite oxide. The cerium-zirconium composite oxide has a total pore volume of 0.353 mL/g, and a total pore volume of 0.161 mL/g after high-temperature aging at 1000°C for 10 h. The cerium-zirconium composite oxide has a specific surface area of 47.6 m²/g after high-temperature aging at 1000°C for 10 h, and a specific surface area of 31.5 m²/g after high-temperature aging at 1100°C for 4 h.

### Comparative Example 2

250 mL mixed feed liquid of Ce(NO₃)₃, ZrO(NO₃)₂, La(NO₃)₃, Nd(NO₃)₃ with a total metal ion molar concentration of 1.5 mol/L was prepared according to the molar ratio of cerium-zirconium composite oxide Ce_{0.80}Zr_{0.10}La_{0.05}Nd_{0.05}O_{1.97}; the mixed feed liquid was mixed with 2.5 mol/L ammonia water for precipitation reaction, the precipitation temperature was 25°C, the pH value in the precipitation process was 10±0.2, the pH value at the end of precipitation was 11, the precipitate was subjected to post-treatment such as filtering, washing and the like to obtain a precursor, and then the precursor was dried at 110°C for 10 h, and roasted at 800°C for 5 h to obtain cerium-zirconium composite oxide. The cerium-zirconium composite oxide has a total pore volume of 0.306 mL/g, and a total pore volume of 0.148 mL/g after high-temperature aging at 1000°C for 10 h. The cerium-zirconium composite oxide has a specific surface area of 44.7 m²/g after high-temperature aging at 1000°C for 10 h, and a specific surface area of 30.9 m²/g after high-temperature aging at 1100°C for 4 h.

### Example 1

250 mL mixed feed liquid of CeCl₃, ZrOCl₂ with a total metal ion molar concentration of 1.5 mol/L was prepared according to the molar ratio of cerium-zirconium composite oxide Ce_{0.50}Zr_{0.35}La_{0.10}Y_{0.05}O_{1.98}; the mixed feed liquid was mixed with 2.5 mol/L sodium hydroxide solution for precipitation reaction, the precipitation temperature was 25°C, the pH value in the precipitation process was controlled at 10±0.2, the pH value at the end of precipitation was 11, the precipitate was subjected to post-treatment such as filtering, washing and the like to obtain a precursor, and then the precursor was dried at 110°C for 10 h, and roasted at 800°C for 5 h to obtain cerium-containing zirconium oxide.

A certain volume of mixed feed liquid of La(NO₃)₃, Y(NO₃)₃ with a total metal ion concentration of 1.6 mol/L was prepared according to the molar ratio of cerium-zirconium composite oxide Ce_{0.50}Zr_{0.35}La_{0.10}Y_{0.05}O_{1.98}, the mixed feed liquid of La(NO₃)₃, Y(NO₃)₃ was uniformly mixed with the cerium-containing zirconium oxide obtained above, and the mixture was dried, then heat-treated at 200°C for 2 h, and then roasted at 600°C for 5 h to obtain cerium-zirconium composite oxide, in which La and Y are located at the grain boundary and surface in the form of oxides. The cerium-zirconium composite oxide has a total pore volume of 0.458 mL/g, and a total pore volume of 0.230 mL/g after high-temperature aging at 1000°C for 10 h. The cerium-zirconium composite oxide has a specific surface area of 53.2 m²/g after high-temperature aging at 1000°C for 10 h, and a specific surface area of 36.4 m²/g after high-temperature aging at 1100°C for 4 h.

### Example 2

250 mL mixed feed liquid of Ce(NO₃)₃, ZrO(NO₃)₂ with a total metal ion molar concentration of 1.5 mol/L was prepared according to the molar ratio of cerium-zirconium composite oxide Ce_{0.80}Zr_{0.10}La_{0.05}Nd_{0.05}O_{1.97}; the mixed feed liquid was mixed with 2.5 mol/L ammonia water for precipitation reaction, the precipitation temperature was 25°C, the pH value in the precipitation process was controlled at 10±0.2, the pH value at the end of precipitation was 11, the precipitate was subjected to post-treatment such as filtering, washing and the like to obtain a precursor, and then the precursor was dried at 110°C for 10 h, and roasted at 800°C for 5 h to obtain cerium-containing zirconium oxide.

A certain volume of mixed feed liquid of La(NO₃)₃, Nd(NO₃)₃ with a total metal ion concentration of 1.1 mol/L was prepared according to the molar ratio of cerium-zirconium composite oxide Ce_{0.80}Zr_{0.10}La_{0.05}Nd_{0.05}O_{1.97}, the mixed feed liquid of La(NO₃)₃, Nd(NO₃)₃ was uniformly mixed with the cerium-containing zirconium oxide obtained above, and the mixture was dried, then heat-treated at 300°C for 1 h, and then roasted at 800°C for 3 h to obtain cerium-zirconium composite oxide, in which La and Nd are located at the grain boundary and surface in the form of oxides. The cerium-zirconium composite oxide has a total pore volume of 0. 423 mL/g, and a total pore volume of 0. 209 mL/g after high-temperature aging at 1000°C for 10 h. The cerium-zirconium composite oxide has a specific surface area of 50.8 m²/g after high-temperature aging at 1000°C for 10 h, and a specific surface area of 35.6 m²/g after high-temperature aging at 1100°C for 4 h.

### Example 3

250 mL mixed feed liquid of Ce(NO₃)₃, ZrO(NO₃)₂ with a total metal ion molar concentration of 1.5 mol/L was prepared according to the molar ratio of cerium-zirconium composite oxide Ce_{0.40}Zr_{0.50}La_{0.05}Nd_{0.05}O_{1.96}; the mixed feed liquid was mixed with 2.5 mol/L ammonia solution for precipitation reaction, the precipitation temperature was 45°C, the pH value in the precipitation process was controlled at 6±0.2, the pH value at the end of precipitation was 9.5, the precipitate was subjected to post-treatment such as filtering, washing and the like to obtain a precursor, and then the precursor was dried at 110°C for 10 h, and roasted at 800°C for 5 h to obtain cerium-containing zirconium oxide.

A certain volume of mixed feed liquid of La(NO₃)₃, Nd(NO₃)₃ with a total metal ion concentration of 2.5 mol/L was prepared according to the molar ratio of the cerium-zirconium composite oxide, the mixed feed liquid of La(NO₃)₃, Nd(NO₃)₃ was uniformly mixed with the cerium-containing zirconium oxide obtained above, and the mixture was dried, then heat-treated at 300°C for 5 h, and then roasted at 800°C for 3 h to obtain cerium-zirconium composite oxide, in which La and Nd are located at the grain boundary and surface in the form of oxides. The cerium-zirconium composite oxide has a total pore volume of 0.433 mL/g, and a total pore volume of 0.229 mL/g after high temperature aging at 1000°C for 10 h. The cerium-zirconium composite oxide has a specific surface area of 53. 8 m²/g after high-temperature aging at 1000°C for 10 h, and a specific surface area of 36.6 m²/g after high-temperature aging at 1100°C for 4 h.

### Example 4

250 mL mixed feed liquid of Ce(NO₃)₃, La(NO₃)₃, ZrO(NO₃)₂ with a total metal ion molar concentration of 1.5 mol/L was prepared according to the molar ratio of cerium-zirconium composite oxide Ce_{0.25}Zr_{0.65}La_{0.05}Y_{0.05}O_{1.97}; the mixed feed liquid was mixed with 2.5 mol/L ammonia water for precipitation reaction, the precipitation temperature was 55°C, the pH value in the precipitation process was controlled at 6±0.2, the pH value at the end of precipitation was 9.5, the precipitate was subjected to post-treatment such as filtering, washing and the like to obtain a precursor, and then the precursor was dried at 110°C for 10 h, and roasted at 750°C for 5 h to obtain lanthanum-containing cerium-zirconium oxide.

A certain volume of 2.5 mol/L Y(NO₃)₃ solution was prepared according to the molar ratio of cerium-zirconium composite oxide, the Y(NO₃)₃ solution was uniformly mixed with the lanthanum-containing cerium-zirconium oxide obtained above, and the mixture was dried, then heat-treated at 500°C for 5 h, and then roasted at 850°C for 3 h to obtain cerium-zirconium composite oxide, in which Y is located at the grain boundary and surface in the form of oxide. The cerium-zirconium composite oxide has a total pore volume of 0.401 mL/g, and a total pore volume of 0.201 mL/g after high-temperature aging at 1000°C for 10 h. The cerium-zirconium composite oxide has a specific surface area of 50.1 m²/g after high-temperature aging at 1000°C for 10 h, and a specific surface area of 35.1 m²/g after high-temperature aging at 1100°C for 4 h.

### Example 5

250 mL mixed feed liquid of CeCl₃, ZrOCl₂ with a total metal ion molar concentration of 1.5 mol/L was prepared according to the molar ratio of cerium-zirconium composite oxide Ce_{0.80}Zr_{0.05}Nd_{0.15}O_{1.95}S_{0.05}, then a proper amount of 1.0 mol/L sulfuric acid solution was added as a complexing agent for introducing S, uniformly mixed; the mixed feed liquid was mixed with 2.5 mol/L sodium hydroxide solution for precipitation reaction, the precipitation temperature was 25°C, the pH value of the precipitation process was 10-14, the pH value at the end of precipitation was 12, the precipitate was subjected to post-treatment such as filtering, washing and the like to obtain a precursor, and then the precursor was dried at 110°C for 10 h and roasted at 500°C for 10 h to obtain cerium-containing zirconium oxide.

A certain volume of 1.50 mol/L Nd(NO₃)₃ solution and 0.4 mol/L (NH₄)₂SO₄ solution were prepared according to the molar ratio of cerium-zirconium composite oxide Ce_{0.80}Z_{r0.05}Nd_{0.15}O_{1.95}S_{0.05}, the Nd(NO₃)₃ solution and (NH₄)₂SO₄ solution were uniformly mixed with the cerium-containing zirconium oxide obtained above step by step, and the mixture was dried, then heat-treated at 200°C for 24 h, and then roasted at 600°C for 6 h to obtain cerium-zirconium composite oxide, which contains Nd and S at the grain boundary and surface, existing in the forms of neodymium oxide and neodymium sulfate respectively. The cerium-zirconium composite oxide has a total pore volume of 0.402 mL/g, and a total pore volume of 0.204 mL/g after high-temperature aging at 1000°C for 10 h. The cerium-zirconium composite oxide has a specific surface area of 50.2 m²/g after high-temperature aging at 1000°C for 10 h, and a specific surface area of 35.1 m²/g after high-temperature aging at 1100°C for 4 h.

### Example 6

270 mL mixed feed liquid of Ce(NO₃)₃, ZrO(NO₃)₂, La(NO₃)₃ with a total metal ion molar concentration of 1.4 mol/L was prepared according to the molar ratio of cerium-zirconium composite oxide Ce_{0.40}Zr_{0.40}La_{0.05}Nd_{0.10}Y_{0.05}O_{1.96}; the mixed feed liquid was mixed with 2.4 mol/L ammonium bicarbonate solution for precipitation reaction, the precipitation temperature was 30°C, the pH value of the precipitation process was 7±0.2, the pH value at the end of precipitation was 8, the precipitate was subjected to post-treatment such as filtering, washing and the like to obtain a precursor, and then the precursor was dried at 110°C for 10 h and roasted at 500°C for 24 h to obtain cerium-containing zirconium oxide.

A certain volume of mixed feed liquid of Nd(NO₃)₃, Y(NO₃)₃ with a total metal ion concentration of 1.6 mol/L was prepared according to the molar ratio of cerium-zirconium composite oxide Ce_{0.40}Zr_{0.40}La_{0.05}Nd_{0.10}Y_{0.05}O_{1.96}, the mixed feed liquid of Nd(NO₃)₃, Y(NO₃)₃ was uniformly mixed with the cerium-containing zirconium oxide obtained above, and the mixture was dried, heat-treated at 300°C for 12 h, and then roasted at 800°C for 12 h to obtain cerium-zirconium composite oxide, which contains element Nd and Y at the grain boundary and surface, existing in the form of oxides. The cerium-zirconium composite oxide has a total pore volume of 0. 462 mL/g, and a total pore volume of 0. 236 mL/g after high-temperature aging at 1000°C for 10 h. The cerium-zirconium composite oxide has a specific surface area of 54.6 m²/g after high-temperature aging at 1000°C for 10 h and a specific surface area of 36.8 m²/g after high-temperature aging at 1100°C for 4 h.

### Example 7

290 mL mixed feed liquid of CeCl₃, ZrOCl₂ with a total metal ion molar concentration of 1.3 mol/L was prepared according to the molar ratio of cerium-zirconium composite oxide Ce_{0.40}Zr_{0.50}La_{0.10}O_{1.95}P_{0.05}; the mixed feed liquid was mixed with 2.2 mol/L sodium carbonate solution for precipitation reaction, the precipitation temperature was 50°C, the pH value in the precipitation process was controlled at 9±0.2, the pH value at the end of precipitation was 10, the precipitate was subjected to post-treatment such as filtering, washing and the like to obtain a precursor, and then the precursor was dried at 110°C for 10 h and roasted at 600°C for 8 h to obtain cerium-containing zirconium oxide.

A certain volume of 1.0 mol/L La(NO₃)₃ solution and 0.5 mol/L ammonium phosphate solution were prepared according to the molar ratio of cerium-zirconium composite oxide Ce_{0.40}Zr_{0.50}La_{0.10}O_{1.95}P_{0.05}, the La(NO₃)₃ solution and ammonium phosphate solution were uniformly mixed with the cerium-containing zirconium oxide obtained above step by step, and the mixture was dried, then heat-treated at 400°C for 6 h, and then roasted at 800°C for 8 h to obtain cerium-zirconium composite oxide, in which La exists in the form of oxide and phosphate at the grain boundary and surface of. The cerium-zirconium composite oxide has a total pore volume of 0.468 mL/g, and a total pore volume of 0.240 mL/g after high temperature aging at 1000°C for 10 h. The cerium-zirconium composite oxide has a specific surface area of 55.1 m²/g after high-temperature aging at 1000°C for 10 h, and a specific surface area of 37.2 m²/g after high-temperature aging at 1100°C for 4 h.

### Example 8

250 mL of mixed feed liquid of CeCl₃, ZrOCl₂ with a total metal ion molar concentration of 1.5 mol/L was prepared according to the molar ratio of cerium-zirconium composite oxide Ce_{0.333}Zr_{0.581}La_{0.044} Pr_{0.042}O_{1.98}; the mixed feed liquid was mixed with 2.5 mol/L sodium hydroxide solution for precipitation reaction, the precipitation temperature was 60°C, the pH value in the precipitation process was controlled at 10±0.2, the pH value at the end of precipitation was 11, the precipitate was subjected to post-treatment such as filtering, washing and the like to obtain a precursor, and then the precursor was dried at 110°C for 10 h and roasted at 750°C for 6 h to obtain cerium-containing zirconium oxide.

A certain volume of mixed feed liquid of La(NO₃)₃, Pr(NO₃)₃ with a total metal ion concentration of 1.0 mol/L was prepared according to the molar ratio of cerium-zirconium composite oxide Ce_{0.333}Zr_{0.581}La_{0.044} Pr_{0.042}O_{1.98}, the mixed feed liquid of La(NO₃)₃, Pr(NO₃)₃ was uniformly mixed with the cerium-containing zirconium oxide obtained above, and the mixture was dried, heat-treated at 300°C for 6 h, and then roasted at 800°C for 6 h to obtain cerium-zirconium composite oxide, in which La and Pr exist at the grain boundary and surface in the form of oxides. The cerium-zirconium composite oxide has a total pore volume of 0.523 mL/g, and a total pore volume of 0.259 mL/g after high-temperature aging at 1000°C for 10 h. The cerium-zirconium composite oxide has a specific surface area of 56.9 m²/g after high-temperature aging at 1000°C for 10 h and a specific surface area of 40.2 m²/g after high-temperature aging at 1100°C for 4 h.

### Example 9

250 mL mixed feed solution of Ce(NO₃)₃, ZrO(NO₃)₂, La(NO₃)₃ (50% of the total amount of La required) with a total metal ion molar concentration of 1.5 mol/L was prepared according to the molar ratio of cerium-zirconium composite oxide Ce_{0.373}Zr_{0.520}La_{0.044}Y_{0.063}O_{1.98}; the mixed feed liquid was mixed with 3.0 mol/L ammonia water for precipitation reaction, the precipitation temperature was 30°C, the pH value of the precipitation process was 9-12, and the pH value at the end of precipitation was 9, the precipitate was subjected to post-treatment such as filtering, washing and the like to obtain a precursor, and then the precursor was dried at 110°C for 10 h and roasted at 700°C for 8 h to obtain cerium-containing zirconium oxide.

A certain volume of La(NO₃)₃ ( 50% of the total amount of La required), Y(NO₃)₃ with a total metal ion concentration of 1.0 mol/L was prepare according to the molar ratio of cerium-zirconium composite oxide Ce_{0.373}Zr_{0.520}La_{0.044}Y_{0.063}O_{1.98}, the mixed feed liquid of La(NO₃)₃, Y(NO₃)₃ was uniformly mixed with the cerium-containing zirconium oxide obtained above, and the mixture was dried, heat-treated at 350°C for 6 h, and then roasted at 700°C for 8 h to obtain cerium-zirconium composite oxide, in which La and Y exist at the grain boundary and surface in the form of oxides. The cerium-zirconium composite oxide has a total pore volume of 0.491 mL/g, and a total pore volume of 0.248 mL/g after high temperature aging at 1000°C for 10 h. The cerium-zirconium composite oxide has a specific surface area of 55. 8 m²/g after high-temperature aging at 1000°C for 10 h, and a specific surface area of 37. 9 m²/g after high-temperature aging at 1100°C for 4 h.

### Example 10

380 mL mixed feed liquid of Ce(NO₃)₃, ZrO(NO₃)₂ with a total metal ion molar concentration of 1.0 mol/L was prepared according to the molar ratio of cerium-zirconium composite oxide Ce_{0.55}Zr_{0.25}La_{0.15}Cu_{0.05}O_{1.95}; the mixed feed liquid was mixed with 2.2 mol/L urea solution and added into an autoclave, and the temperature was slowly raised to 120°C for hydrothermal reaction for 8 h, the precipitate was subjected to post-treatment such as filtering, washing and the like to obtain a precursor, and then the precursor was dried at 110°C for 10 h and roasted at 800°C for 5 h to obtain cerium-containing zirconium oxide.

A certain volume of mixed feed liquid of La(NO₃)₃, Cu(NO₃)₂ with a total metal ion concentration of 2.2 mol/L was prepared according to the molar ratio of cerium-zirconium composite oxide Ce_{0.55}Zr_{0.25}La_{0.15}Cu_{0.05}O_{1.95}, the mixed feed liquid of La(NO₃)₃, Cu(NO₃)₂ was uniformly mixed with the cerium-containing zirconium oxide obtained above, and the mixture was dried, then heat-treated at 600°C, and then roasted at 1050°C for 1 h to obtain cerium-zirconium composite oxide, in which La and Cu exist at the grain boundary and surface in the form of oxides. The cerium-zirconium composite oxide has a total pore volume of 0.443 mL/g, and a total pore volume of 0. 219 mL/g after high-temperature aging at 1000°C for 10 h. The cerium-zirconium composite oxide has a specific surface area of 51.7 m²/g after high-temperature aging at 1000°C for 10 h, and a specific surface area of 35.8 m²/g after high-temperature aging at 1100°C for 4 h.

### Example 11

320 mL mixed feed liquid of CeCl₃, ZrOCl₂ with a total metal ion molar concentration of 1.2 mol/L was prepared according to the molar ratio of cerium-zirconium composite oxide Ce_{0.50}Zr_{0.35}Ba_{0.05}Mn_{0.10}O_{1.96}; the mixed feed liquid was mixed with 2.1 mol/L sodium hydroxide solution for precipitation reaction, the precipitation temperature was 90°C, the pH value of the precipitation process was 12-14, the pH value at the end of precipitation was 13, the precipitate was subjected to post-treatment such as filtering, washing and the like to obtain a precursor, and then the precursor was dried at 110°C for 10 h and roasted at 1050°C for 1 h to obtain cerium-containing zirconium oxide.

A certain volume of mixed feed liquid of Ba(NO₃)₂, Mn(NO₃)₂ with a total metal ion concentration of 1.6 mol/L was prepared according to the molar ratio of cerium-zirconium composite oxide Ce_{0.50}Zr_{0.35}Ba_{0.05}Mn_{0.10}O_{1.96}, the mixed feed liquid of Ba(NO₃)₂, Mn(NO₃)₂ was uniformly mixed with the cerium-containing zirconium oxide obtained above, and the mixture was dried, heat-treated at 400°C for 6 h, and then roasted at 700°C for 8 h to obtain cerium-zirconium composite oxide, in which Ba and Mn exist at the grain boundary and surface in the form of oxides. The cerium-zirconium composite oxide has a total pore volume of 0.451 mL/g, and a total pore volume of 0. 224 mL/g after high-temperature aging at 1000°C for 10 h. The cerium-zirconium composite oxide has a specific surface area of 52.8 m²/g after high-temperature aging at 1000°C for 10 h, and 36.2 m²/g after high-temperature aging at 1100°C for 4 h.

### Example 12

250 mL mixed feed liquid of CeCl₃, ZrOCl₂, LaCl₃ with a total metal ion molar concentration of 1.5 mol/L was prepared according to the molar ratio of cerium-zirconium composite oxide Ce_{0.330}Zr_{0.580}La_{0.033}Nd_{0.032}Y_{0.025}O_{1.97}; the mixed feed liquid was mixed with 2.5 mol/L sodium hydroxide solution for precipitation reaction, the precipitation temperature was 45°C, the pH value in the precipitation process was controlled at 10±0.2, the pH value at the end of precipitation was 11, the precipitate was subjected to post-treatment such as filtering, washing and the like to obtain a precursor, and then the precursor was dried at 110°C for 10 h and roasted at 850°C for 5 h to obtain cerium-containing zirconium oxide.

A certain volume of mixed feed liquid of Nd(NO₃)₃, Y(NO₃)₃ with a total metal ion concentration of 0.7 mol/L was prepared according to the molar ratio of cerium-zirconium composite oxide Ce_{0.330}Zr_{0.580}La_{0.033}Nd_{0.032}Y_{0.02}5O_{1.97}, the mixed feed liquid of Nd(NO₃)₃, Y(NO₃)₃ was uniformly mixed with the cerium-containing zirconium oxide obtained above, and the mixture was dried, heat-treated at 350°C for 6 h, and then roasted at 850°C for 5 h to obtain cerium-zirconium composite oxide, which contains Nd and Y elements at the grain boundary and surface, existing in the form of oxides. The cerium-zirconium composite oxide has a total pore volume of 0.548 mL/g, and a total pore volume of 0.276 mL/g after high-temperature aging at 1000°C for 10 h. The cerium-zirconium composite oxide has a specific surface area of 57.1m²/g after high-temperature aging at 1000°C for 10 h, and a specific surface area of 40.9m²/g after high-temperature aging at 1100°C for 4 h.

### Example 13

250 mL mixed feed liquid of CeCl₃, ZrOCl₂, YCl₃ with a total metal ion molar concentration of 1.5 mol/L was prepare according to the molar ratio of cerium-zirconium composite oxide Ce_{0.18}Zr_{0.64}La_{0.03}Y_{0.15}O_{1.96}; the mixed feed liquid was mixed with 2.5 mol/L sodium hydroxide solution for precipitation reaction, the precipitation temperature was 50°C, the pH value of the precipitation process was 10-14, the pH value at the end of precipitation was 10.5, the precipitate was subjected to post-treatment such as filtering, washing and the like to obtain a precursor, and then the precursor was dried at 110°C for 10 h and roasted at 650°C for 8 h to obtain cerium-containing zirconium oxide.

A certain volume of 0.5 mol/L La(NO₃)₃ solution was prepared according to the molar ratio of cerium-zirconium composite oxide Ce_{0.18}Zr_{0.64}La_{0.03}Y_{0.15}O_{1.96}, the La(NO₃)₃ solution was uniformly mixed with the cerium-containing zirconium oxide obtained above, and the mixture was dried, heat-treated at 200°C for 10 h, and then roasted at 650°C for 8 h to obtain cerium-zirconium composite oxide, in which La exists at the grain boundary and surface in the form of oxide. The cerium-zirconium composite oxide has a total pore volume of 0.582 mL/g, and a total pore volume of 0.286 mL/g after high-temperature aging at 1000°C for 10 h. The cerium-zirconium composite oxide has a specific surface area of 57.9 m²/g after high-temperature aging at 1000°C for 10 h, and a specific surface area of 43.8 m²/g after high-temperature aging at 1100°C for 4 h.

### Example 14

250 mL mixed feed liquid of CeCl₃, ZrOCl₂ with a total metal ion molar concentration of 1.5 mol/L was prepared according to the molar ratio of cerium-zirconium composite oxide Ce_{0.16}Zr_{0.78}La_{0.02}Nd_{0.04}O_{1.98}; the mixed feed liquid was mixed with 2.5 mol/L sodium hydroxide solution for precipitation reaction, the precipitation temperature was 80°C, the pH value of the precipitation process was 10-14, the pH value at the end of precipitation was 10, the precipitate was subjected to post-treatment such as filtering, washing and the like to obtain a precursor, and then the precursor was dried at 110°C for 10 h and roasted at 600°C for 10 h to obtain cerium-containing zirconium oxide.

A certain volume of mixed feed liquid of La(NO₃)₃, Nd(NO₃)₃ with a total metal ion concentration of 0.7 mol/L was prepared according to the molar ratio of cerium-zirconium composite oxide Ce_{0.16}Zr_{0.78}La_{0.02}Nd_{0.04}O_{1.98}, the mixed feed liquid of La(NO₃)₃, Nd(NO₃)₃ was uniformly mixed with the cerium-containing zirconium oxide obtained above, and the mixture was dried, heat-treated at 400°C for 6 h, and then roasted at 600°C for 12 h to obtain cerium-zirconium composite oxide, in which La and Nd exist at the grain boundary and surface in the form of oxides. The cerium-zirconium composite oxide has a total pore volume of 0.591 mL/g, and a total pore volume of 0.289 mL/g after high-temperature aging at 1000°C for 10 h. The cerium-zirconium composite oxide has a specific surface area of 60.2 m²/g after high-temperature aging at 1000°C for 10 h, and a specific surface area of 45.1 m²/g after high-temperature aging at 1100°C for 4 h.

### Example 15

320 mL mixed feed liquid of Ce(NO₃)₃, ZrO(NO₃)₂ with a total metal ion molar concentration of 1.2 mol/L was prepared according to the molar ratio of cerium-zirconium composite oxide Ce_{0.40}Zr_{0.40}Al_{0.20}O_{1.93}N_{0.08}; the mixed feed liquid was mixed with 2.2 mol/L ammonia water/ammonium bicarbonate mixed feed liquid for precipitation reaction, the precipitation temperature was 30°C, the pH value in the precipitation process was 7.5-8.5, the pH value at the end of precipitation was 8, the precipitate was subjected to post-treatment such as filtering, washing and the like to obtain a precursor, and then the precursor was dried at 110°C for 10 h and roast at 950°C for 4 h to obtain cerium-containing zirconium oxide.

A certain volume of 2.2 mol/L Al(NO₃)₃ solution and 0.8 mol/L NH₄NO₃ solution was prepared according to the molar ratio of cerium-zirconium composite oxide Ce_{0.40}Zr_{0.40}Al_{0.20}O_{1.93}N_{0.08}, the Al(NO₃)₃ solution and NH₄NO₃ solution were uniformly mixed with the cerium-containing zirconium oxide obtained above step by step, and the mixture was dried, then heat-treated at 300°C for 8 h, and then roasted at 800°C for 6 h to obtain a cerium-zirconium composite oxide, in which Al exists at the grain boundary and surface in the form of oxide, and N exists at the grain boundary and surface in the form of a nitrogen-containing compound. The cerium-zirconium composite oxide has a total pore volume of 0.611 mL/g, and a total pore volume of 0.301 mL/g after high-temperature aging at 1000°C for 10 h. The cerium-zirconium composite oxide has a specific surface area of 62.4 m²/g after high-temperature aging at 1000°C for 10 h, and a specific surface area of 46.3 m²/g after high-temperature aging at 1100°C for 4 h.

### Example 16

380 mL mixed feed liquid of CeCl₃, ZrOCl₂ with a total metal ion molar concentration of 1.0 mol/L was prepared according to the molar ratio of cerium-zirconium composite oxide Ce_{0.60}Zr_{0.30}Ba_{0.10}O_{1.98}F_{0.01}; the mixed feed liquid was mixed with 2.3 mol/L sodium hydroxide solution for precipitation reaction, the precipitation temperature was 20°C, the pH value of the precipitation process was 4.5-10, the pH value at the end of precipitation was 11, the precipitate was subjected to post-treatment such as filtering, washing and the like to obtain a precursor, and then the precursor was dried at 110°C for 10 h and roasted at 700°C for 8 h to obtain cerium-containing zirconium oxide.

A certain volume of 1.0 mol/L Ba(NO₃)₂ solution and 0.1 mol/L NH₄F solution were prepared according to the molar ratio of cerium-zirconium composite oxide Ce_{0.60}Zr_{0.30}Ba_{0.10}O_{1.98}F_{0.01}, the Ba(NO₃)₂ solution and NH₄F solution were uniformly mixed with the cerium-containing zirconium oxide obtained above step by step, and the mixture was dried, then heat-treated at 150°C for 12 h, and then roasted at 600°C for 12 h to obtain cerium-zirconium composite oxide, in which Ba exists at the grain boundary and surface in the form of oxide, and F exists at the grain boundary and surface in the form of a fluoride. The cerium-zirconium composite oxide has a total pore volume of 0.450 mL/g, and a total pore volume of 0.222 mL/g after high-temperature aging at 1000°C for 10 h. The cerium-zirconium composite oxide has a specific surface area of 52.2 m²/g after high-temperature aging at 1000°C for 10 h, and a specific surface area of 36.2 m²/g after high-temperature aging at 1100°C for 4 h.

### Example 17

250 mL mixed feed liquid of Ce(NO₃)₃, ZrO(NO₃)₂, Y(NO₃)₃ with a total metal ion molar concentration of 1.5 mol/L was prepared according to the molar ratio of cerium-zirconium composite oxide Ce_{0.45}Zr_{0.35}Y_{0.15}Mg_{0.05}O_{1.96}; the mixed feed liquid was mixed with 3.0 mol/L ammonia water for precipitation reaction, the precipitation temperature was 30°C, the pH value of the precipitation process was 9-12, and the pH value at the end of precipitation was 9, the precipitate was subjected to post-treatment such as filtering, washing and the like to obtain a precursor, and then the precursor was dried at 110°C for 10 h and roasted at 950°C for 3 h to obtain cerium-containing zirconium oxide.

A certain volume of 0.5 mol/L Mg(NO₃)₂ solution was prepared according to the molar ratio of cerium-zirconium composite oxide Ce_{0.45}Zr_{0.35}Y_{0.15}Mg_{0.05}O_{1.96}, the Mg(NO₃)₂ solution was uniformly mixed with the cerium-containing zirconium oxide obtained above, and the mixture was dried, then heat-treated at 250°C for 10 h, and then roasted at 900°C for 5 h to obtain cerium-zirconium composite oxide, in which Mg element exists at the grain boundary and surface in the form of oxide. The cerium-zirconium composite oxide has a total pore volume of 0.438 mL/g, and a total pore volume of 0.221 mL/g after high temperature aging at 1000°C for 10 h. The cerium-zirconium composite oxide has a specific surface area of 52.9 m²/g after high-temperature aging at 1000°C for 10 h, and a specific surface area of 36.1 m²/g after high-temperature aging at 1100°C for 4 h.

### Example 18

470 mL mixed feed liquid of CeCl₃, ZrOCl₂ with a total metal ion molar concentration of 0.8 mol/L was prepared according to the molar ratio of cerium zirconium composite oxide Ce_{0.40}Zr_{0.45}Pr_{0.10}Sm_{0.05}O_{1.97}; the mixed feed liquid was mixed with 1.0 mol/L sodium hydroxide solution for precipitation reaction, the precipitation temperature was 50°C, the pH value of the precipitation process was 5-9, the pH value at the end of precipitation was 10, and the precipitate was subjected to post-treatment such as filtering, washing and the like to obtain a precursor, and then the precursor was dried at 110°C for 10 h and roasted at 500°C for 16 h to obtain cerium-containing zirconium oxide.

A certain volume of mixed feed liquid of Pr(NO₃)₃, Sm(NO₃)₃ with a total metal ion concentration of 1.6 mol/L was prepared according to the molar ratio of cerium-zirconium composite oxide Ce_{0.40}Zr_{0.45}Pr_{0.10}Sm_{0.05}O_{1.97}, the mixed feed liquid of Pr(NO₃)₃, Sm(NO₃)₃ was uniformly mixed with the cerium-containing zirconium oxide obtained above, and the mixture was dried, and then heat-treated at 300°C for 8 h, and then roasted at 500°C for 24 h to obtain cerium-zirconium composite oxide, in which Pr and Sm elements exist at the grain boundary and surface in the form of oxides. The cerium-zirconium composite oxide has a total pore volume of 0.451 mL/g, and a total pore volume of 0.235 mL/g after high-temperature aging at 1000°C for 10 h. The cerium-zirconium composite oxide has a specific surface area of 54.8 m²/g after high-temperature aging at 1000°C for 10 h, and a specific surface area of 36.9 m²/g after high-temperature aging at 1100°C for 4 h.

### Example 19

250 mL mixed feed liquid of Ce(NO₃)₃, ZrO(NO₃)₂ with a total metal ion molar concentration of 1.5 mol/L was prepared according to the molar ratio of cerium-zirconium composite oxide Ce_{0.20}Zr_{0.60}Eu_{0.10}Co_{0.10}O_{1.98}; the mixed feed liquid was mixed with 3.0 mol/L ammonia water for precipitation reaction, the precipitation temperature was 35°C, the pH value of the precipitation process was 9-12, and the pH value at the end of precipitation was 9, the precipitate was subjected to post-treatment such as filtering, washing and the like to obtain a precursor, and then the precursor was dried at 110°C for 10 h and roasted at 600°C for 12 h to obtain cerium-containing zirconium oxide.

A certain volume of mixed feed liquid of Eu(NO₃)₃, Co(NO₃)₂ with a total metal ion concentration of 2.2 mol/L was prepared according to the molar ratio of cerium-zirconium composite oxide Ce_{0.20}Zr_{0.60}Eu_{0.10}Co_{0.10}O_{1.98}, the mixed feed liquid of Eu(NO₃)₃, Co(NO₃)₂ was uniformly mixed with the cerium-containing zirconium oxide obtained above, and the mixture was dried, heat-treated at 450°C for 1 h, and then roasted at 800°C for 6 h to obtain cerium-zirconium composite oxide, in which Eu and Co elements exist at the grain boundary and surface in the form of oxides. The cerium-zirconium composite oxide has a total pore volume of 0. 552 mL/g, and a total pore volume of 0. 279 mL/g after high-temperature aging at 1000°C for 10 h. The cerium-zirconium composite oxide has a specific surface area of 57.3 m²/g after high-temperature aging at 1000°C for 10 h, and a specific surface area of 42.5 m²/g after high-temperature aging at 1100°C for 4 h.

### Example 20

290 mL of mixed feed liquid of Ce(NO₃)₃, ZrO(NO₃)₂ with a total metal ion molar concentration of 1.3 mol/L was prepared according to the molar ratio of cerium-zirconium composite oxide Ce_{0.90}Zr_{0.05}Gd_{0.03}Yb_{0.02}O_{1.97}; the mixed feed liquid was mixed with 3.0 mol/L ammonia water for precipitation reaction, the precipitation temperature was 20°C, the pH value of the precipitation process was 9-12, and the pH value at the end of precipitation was 9, the precipitate was subjected to post-treatment such as filtering, washing and the like to obtain a precursor, and then the precursor was dried at 110°C for 10 h and roasted at 550°C for 12 h to obtain cerium-containing zirconium oxide.

A certain volume of mixed feed liquid of Gd(NO₃)₃, Yb(NO₃)₃ with a total metal ion concentration of 0.6 mol/L was prepared according to the molar ratio of cerium-zirconium composite oxide Ce_{0.90}Zr_{0.05}Gd_{0.03}Yb_{0.02}O_{1.97}, the mixed feed liquid of Gd(NO₃)₃, Yb(NO₃)₃ was uniformly mixed with the cerium-containing zirconium oxide obtained above, and the mixture was dried, heat-treated at 350°C for 7 h, and then roasted at 600°C for 12 h to obtain cerium-zirconium composite oxide, which contains Gd and Yb elements at that grain boundary and surface, existing in the form of oxides. The cerium-zirconium composite oxide has a total pore volume of 0.406 mL/g, and a total pore volume of 0.210 mL/g after high-temperature aging at 1000°C for 10 h. The cerium-zirconium composite oxide has a specific surface area of 50.4 m²/g after high-temperature aging at 1000°C for 10 h, and a specific surface area of 35.3 m²/g after high-temperature aging at 1100°C for 4 h.

### Example 21

250mL mixed feed liquid of CeCl₃, ZrOCl₂ with a total metal ion molar concentration of 1.5 mol/L was prepared according to the molar ratio of cerium-zirconium composite oxide Ce_{0.70}Zr_{0.20}Fe_{0.04}Ba_{0.04}Sc_{0.02}O_{1.98}; the mixed feed liquid was mixed with 2.5 mol/L sodium hydroxide solution for precipitation reaction, the precipitation temperature was 80°C, the pH value of the precipitation process was 10-14, the pH value at the end of precipitation was 10, the precipitate was subjected to post-treatment such as filtering, washing and the like to obtain a precursor, and then that precursor was dried at 110°C for 10 h and roasted at 600°C for 12 h to obtain cerium-containing zirconium oxide.

A certain volume of mixed feed liquid of Fe(NO₃)₃, Ba(NO₃)₂ and S_{C}(NO₃)₃ with a total metal ion concentration of 1.1 mol/L was prepared according to the molar ratio of cerium-zirconium composite oxide Ce_{0.70}Zr_{0.20}Fe_{0.04}Ba_{0.04}Sc_{0.02}O_{1.98}, the mixed feed liquid of Fe(NO₃)₃, Ba(NO₃)₂ and Sc(NO₃)₃was uniformly mixed with the cerium-containing zirconium oxide obtained above, and the mixture was dried, heat-treated at 300°C for 8 h, and then roasted at 800°C for 7 h to obtain cerium-zirconium composite oxide, which contains Fe, Ba and Sc elements at that grain boundary and surface, existing in the form of oxides. The cerium-zirconium composite oxide has a total pore volume of 0.431 mL/g, and a total pore volume of 0.217 mL/g after high-temperature aging at 1000°C for 10 h. The cerium-zirconium composite oxide has a specific surface area of 51.6 m²/g after high-temperature aging at 1000°C for 10 h, and a specific surface area of 35.7 m²/g after high-temperature aging at 1100°C for 4 h.

### Example 22

250 mL mixed feed liquid of CeCl₃, ZrOCl₂ with a total metal ion molar concentration of 1.5 mol/L was prepared according to the molar ratio of cerium-zirconium composite oxide Ce_{0.50}Zr_{0.45}Mn_{0.05}O_{1.99}; the mixed feed liquid was mixed with 2.5 mol/L sodium hydroxide solution for precipitation reaction, the precipitation temperature was 0°C, the pH value in the precipitation process was controlled at 9±0.2, the pH value at the end of precipitation was 11, the precipitate was subjected to post-treatment such as filtering, washing and the like to obtain a precursor, and then that precursor was dried at 110°C for 10 h and roasted at 450°C for 18 h to obtain cerium-containing zirconium oxide.

A certain volume of Mn(NO₃)₂ molten salt solution was prepared according to the molar ratio of cerium-zirconium composite oxide Ce_{0.50}Zr_{0.45}Mn_{0.05}O_{1.99}, a proper amount of the Mn(NO₃)₂ molten salt solution was uniformly mixed with the cerium-containing zirconium oxide obtained above, and the mixture was dried, then heat-treated at 600°C for 0.5 h and then roasted at 950°C for 3 h to obtain cerium-zirconium composite oxide, which contains Mn element at the grain boundary and surface, existing in the form of oxide. The cerium-zirconium composite oxide has a total pore volume of 0.404 mL/g, and a total pore volume of 0.206 mL/g after high-temperature aging at 1000°C for 10 h. The cerium-zirconium composite oxide has a specific surface area of 50.3 m²/g after high-temperature aging at 1000°C for 10 h, and a specific surface area of 35.2 m²/g after high-temperature aging at 1100°C for 4 h.

### Example 23

250 mL mixed feed liquid of Ce(NO₃)₃, ZrO(NO₃)₂ with a total metal ion molar concentration of 1.5 mol/L was prepared according to the molar ratio of cerium-zirconium composite oxide Ce_{0.40}Zr_{0.45}Si_{0.10}Hf_{0.02}Sr_{0.03}O_{1.98}; the mixed feed liquid was mixed with 3.0 mol/L ammonia water for precipitation reaction, the precipitation temperature was 30°C, the pH value of the precipitation process was controlled at 9. 0 ± 0.2, and the pH value at the end of precipitation was 10, the precipitate was subjected to post-treatment such as filtering, washing and the like to obtain a precursor, and then the precursor was dried at 110°C for 10 h and roasted at 650°C for 10 h to obtain cerium-containing zirconium oxide.

A certain volume of mixed feed liquid of ethyl orthosilicate, Sr(NO₃)₂ and HfO(NO₃)₂ with a total metal ion concentration of 1.6 mol/L was prepared according to the molar ratio of cerium-zirconium composite oxide Ce_{0.40}Zr_{0.45}Si_{0.10}Hf_{0.02}Sr_{0.03}O_{1.98}, the mixed feed liquid of ethyl orthosilicate, Sr(NO₃)₂ and HfO(NO₃)₂ was uniformly mixed with the cerium-containing zirconium oxide obtained above, and the mixture was dried, then heat-treated at 350°C for 7 h, and then roasted at 800°C for 5 h to obtain cerium-zirconium composite oxide, which contains Si, Sr and Hf elements at the grain boundary and surface, existing in the form of oxides. The cerium-zirconium composite oxide has a total pore volume of 0. 467 mL/g, and a total pore volume of 0. 229 mL/g after high-temperature aging at 1000°C for 10 h. The cerium-zirconium composite oxide has a specific surface area of 54.9 m²/g after high-temperature aging at 1000°C for 10 h, and a specific surface area of 37.3 m²/g after high-temperature aging at 1100°C for 4 h.

### Example 24

250 mL mixed feed liquid of CeCl₃, ZrOChwith a total metal ion molar concentration of 1.5 mol/L was prepared according to the molar ratio of cerium-zirconium composite oxide Ce_{0.333}Zr_{0.581}La_{0.044}Pr_{0.042}O_{1.98}; the mixed feed liquid was mixed with 2.5 mol/L sodium hydroxide solution for precipitation reaction, the precipitation temperature was 60°C, the pH value in the precipitation process was controlled at 10±0.2, the pH value at the end of precipitation was 11, the precipitate was subjected to post-treatment such as filtration, washing and the like to obtain a precursor, and then the precursor was dried at 110°C for 10 h and roasted at 750°C for 6 h to obtain cerium-containing zirconium oxide.

A certain volume of mixed feed liquid of La(NO₃)₃, Pr(NO₃)₃ with a total metal ion concentration of 1.0 mol/L was prepared according to the molar ratio of cerium-zirconium composite oxide Ce_{0.333}Zr_{0.581}La_{0.044}Pr_{0.042}O_{1.98}, the mixed feed liquid of La(NO₃)₃, Pr(NO₃)₃ was uniformly mixed with the cerium-containing zirconium oxide obtained above, and the mixture was dried, then heat-treated at 250°C for 4 h, heat-treated at 400°C for 5 h, and then roasted at 800°C for 6 h to obtain cerium-zirconium composite oxide, in which La and Pr exist at the grain boundary and surface in the form of oxides. The cerium-zirconium composite oxide has a total pore volume of 0.551 mL/g, and a total pore volume of 0.279 mL/g after high-temperature aging at 1000°C for 10 h. The cerium-zirconium composite oxide has a specific surface area of 57.8 m²/g after high-temperature aging at 1000°C for 10 h and a specific surface area of 41.1 m²/g after high-temperature aging at 1100°C for 4 h.

### Example 25

250 mL mixed feed liquid of Ce(NO₃)₃, ZrO(NO₃)₂, La(NO₃)₃ (50% of the total amount of La required) with a total metal ion molar concentration of 1.5 mol/L was prepared according to the molar ratio of cerium-zirconium composite oxide Ce_{0.373}Zr_{0.520}La_{0.044}Y_{0.063}O_{1.98}; the mixed feed liquid was mixed with 3.0 mol/L ammonia water for precipitation reaction, the precipitation temperature was 30°C, the pH value of the precipitation process was 9-12, and the pH value at the end of precipitation was 9, the precipitate was subjected to post-treatment such as filtering, washing and the like to obtain a precursor, and then the precursor was dried at 110°C for 10 h and roasted at 700°C for 8 h to obtain cerium-containing zirconium oxide.

A certain volume of mixed feed liquid of 1.0 mol/L La(NO₃)₃ (50% of the total amount of La required), Y(NO₃)₃ with a total metal ion concentration of 1.0 mol/L was prepared according to the molar ratio of cerium-zirconium composite oxide Ce_{0.373}Zr_{0.520}La_{0.044}Y_{0.063}O_{1.98}, the mixed feed liquid of La(NO₃)₃, Y(NO₃)₃ was uniformly mixed with the cerium-containing zirconium oxide obtained above, and the mixture was dried, then heat-treated at 200°C for 5 h, heat-treated at 450°C for 3 h, then roasted at 650°C for 5 h, and roasted at 800°C for 3 h to obtain cerium-zirconium composite oxide, in which La and Y exist at the grain boundary and surface in the form of oxides. The cerium-zirconium composite oxide has a total pore volume of 0.501 mL/g, and a total pore volume of 0.254 mL/g after high-temperature aging at 1000°C for 10 h. The cerium-zirconium composite oxide has a specific surface area of 56.3 m²/g after high-temperature aging at 1000°C for 10 h, and a specific surface area of 38.4 m²/g after high-temperature aging at 1100°C for 4 h.

### Example 26

250 mL mixed feed liquid of Ce(NO₃)₃, ZrO(NO₃)₂ with a total metal ion molar concentration of 1.2 mol/L was prepared according to the molar ratio of cerium-zirconium composite oxide Ce_{0.380}Zr_{0.531}La_{0.072}Pr_{0.017}O_{1.98}; the mixed feed liquid was mixed with 2.5 mol/L sodium hydroxide solution for precipitation reaction, the precipitation temperature was 30°C, the pH value of the precipitation process was 10-14, the pH value at the end of precipitation was 10.5, then the required LaCl₃ solution and sodium hydroxide solution were added for the second-step precipitation reaction, the pH value at the end of precipitation was 10.5, the precipitate was subjected to post-treatment such as filtering, washing and the like to obtain a precursor, and then the precursor was dried at 110°C for 10 h and roasted at 750°C for 5 h to obtain cerium-containing zirconium oxide with a core-shell structure.

A certain volume of Pr(NO₃)₃ solution with a total metal ion concentration of 1.0 mol/L was prepared according to the molar ratio of cerium-zirconium composite oxide Ce_{0.380}Zr_{0.531}La_{0.072}Pr_{0.017}O_{1.98}, the Pr(NO₃)₃ solution was uniformly mixed with the cerium-containing zirconium oxide obtained above, and the mixture was dried, then heat-treated at 200°C for 5 h, heat-treated at 450°C for 3 h, and roasted at 800°C for 3 h to obtain cerium-zirconium composite oxide with a core-shell structure, in which the shell is rich in praseodymium oxide, and La and Pr exist at the grain boundary and surface in the form of oxides. The cerium-zirconium composite oxide has a total pore volume of 0.556 mL/g, and a total pore volume of 0.287 mL/g after high-temperature aging at 1000°C for 10 h. The cerium-zirconium composite oxide has a specific surface area of 59.5 m²/g after high-temperature aging at 1000°C for 10 h, and a specific surface area of 42.1 m²/g after high-temperature aging at 1100°C for 4 h.

### Example 27

250 mL mixed feed solution containing CeCl₃, ZrOCl₂ with a total metal ion molar concentration of 1.0 mol/L was prepared according to the molar ratio of cerium-zirconium composite oxide Ce_{0.421}Zr_{0.470}La_{0.045}Y_{0.064}O_{1.97}; the mixed feed liquid was mixed with 2.5 mol/L sodium hydroxide solution for precipitation reaction, the precipitation temperature was 60°C, the pH value in the precipitation process was controlled at 5-11, the pH value was adjusted twice for step-by-step precipitation, the pH value was firstly adjusted to 5 for zirconium ion precipitation, then the pH value was slowly adjusted to 11 for cerium ion precipitation, the pH value at the end of precipitation was 11, the precipitate was subjected to post-treatment such as filtering, washing and the like to obtain a precursor, and then the precursor was dried at 110°C for 10 h and roasted at 750°C for 6 h to obtain cerium-containing zirconium oxide with gradient distribution.

A certain volume of mixed feed liquid of La(NO₃)₃, Y(NO₃)₃ with a total metal ion concentration of 1.3 mol/L was prepared according to the molar ratio of cerium-zirconium composite oxide Ce_{0.421}Zr_{0.470}La_{0.045}Y_{0.064}O_{1.97}, the mixed feed liquid of La(NO₃)₃, Y(NO₃)₃ was uniformly mixed with the cerium-containing zirconium oxide obtained above, and the mixture was dried, heat-treated at 150°C for 8 h, then heat-treated at 400°C for 5 h, and then roasted at 800°C for 5 h to obtain cerium-zirconium composite oxide, which has an element gradient distribution structure, wherein cerium oxide, lanthanum oxide and yttrium oxide are enriched outside, and La and Y exist at the grain boundary and surface in the form of oxides. The cerium-zirconium composite oxide has a total pore volume of 0. 597 mL/g, and a total pore volume of 0.295 mL/g after high-temperature aging at 1000°C for 10 h. The cerium-zirconium composite oxide has a specific surface area of 62.8 m²/g after high-temperature aging at 1000°C for 10 h, and a specific surface area of 43.1 m²/g after high-temperature aging at 1100°C for 4 h.

### Example 28

250 mL mixed feed liquid containing CeCl₃, ZrOCh with a total metal ion molar concentration of 1.5 mol/L was prepared according to the molar ratio of cerium-zirconium composite oxide Ce_{0.239}Zr_{0.703}La_{0.017}Nd_{0.041}O_{1.98}; the mixed feed liquid was mixed with 2.5 mol/L sodium hydroxide solution for precipitation reaction, the precipitation temperature was 80°C, the pH value in the precipitation process was controlled at 9-11, two-step precipitation was carried out, the pH value was firstly adjusted to 5 for zirconium ion precipitation, after aging for 1 h, the pH value was slowly adjusted to 11 for cerium ion precipitation, the pH value at the end of precipitation was 11, the precipitate was subjected to post-treatment such as filtering, washing and the like to obtain a precursor, and then the precursor was dried at 110°C for 10 h and roasted at 600°C for 8 h to obtain cerium-containing zirconium oxide with a core-shell structure.

A certain volume of mixed feed liquid of La(NO₃)₃, Nd(NO₃)₃ with a total metal ion concentration of 1.5 mol/L was prepared according to the molar ratio of cerium-zirconium composite oxide Ce_{0.239}Zr_{0.703}La_{0.017}Nd_{0.041}O_{1.98}, the mixed feed liquid of La(NO₃)₃, Nd(NO₃)₃ was uniformly mixed with the cerium-containing zirconium oxide obtained above, and the mixture was dried, then heat-treated t at 250°C for 4 h, heat-treated at 300°C for 5 h, and then roasted at 600°C for 6 h to obtain cerium-zirconium composite oxide, which has a core-shell structure, wherein lanthanum oxide and neodymium oxide are enriched outside, and La and Nd exist at the grain boundary and surface in the form of oxides. The cerium-zirconium composite oxide has a total pore volume of 0.558 mL/g, and a total pore volume of 0.289 mL/g after high-temperature aging at 1000°C for 10 h. The cerium-zirconium composite oxide has a specific surface area of 60.8 m²/g after high-temperature aging at 1000°C for 10 h, and a specific surface area of 42.6 m²/g after high-temperature aging at 1100°C for 4 h.

### Example 29

250 mL mixed feed liquid of CeCl₃, ZrOCl₂ with a total metal ion molar concentration of 1.2 mol/L was prepared according to the molar ratio of cerium-zirconium composite oxide Ce_{0.330}Zr_{0.576}La_{0.035}Nd_{0.034}Y_{0.025}O_{1.98}; the mixed feed liquid was mixed with 2.5 mol/L sodium hydroxide solution for precipitation reaction, the precipitation temperature was 60°C, the pH value in the precipitation process was controlled at 5-10, the pH value was adjusted twice for step-by-step precipitation, the pH value was firstly adjusted to 5 for zirconium ion precipitation, then the pH value was slowly adjusted to 10 for cerium ion precipitation, the pH value at the end of precipitation was 10, the precipitate was subjected to post-treatment such as filtering, washing and the like to obtain a precursor, and then the precursor was dried at 110°C for 10 h and roasted at 750°C for 6 h to obtain cerium-containing zirconium oxide with gradient distribution.

A certain volume of mixed feed liquid of La(NO₃)₃, Nd(NO₃)₃, Y(NO₃)₃ with a total metal ion concentration of 1.2 mol/L was prepared according to the molar ratio of cerium-zirconium composite oxide Ce_{0.330}Zr_{0.576}La_{0.035}Nd_{0.034}Y_{0.025}O_{1.98}, the mixed feed liquid of La(NO₃)₃, Nd(NO₃)₃, Y(NO₃)₃ was uniformly mixed with the cerium-containing zirconium oxide obtained above, and the mixture was dried, then heat-treated at 200°C for 6 h, then heat-treated at 400°Cfor 5 h, and then roasted at 800°C for 5 h to obtain cerium-zirconium composite oxide, which has an element gradient distribution structure, wherein lanthanum oxide, neodymium oxide and yttrium oxide are enriched outside, and La, Nd and Y exist at the grain boundary and surface in the form of oxides. The cerium-zirconium composite oxide has a total pore volume of 0.571 mL/g, and a total pore volume of 0.299 mL/g after high-temperature aging at 1000°C for 10 h. The cerium-zirconium composite oxide has a specific surface area of 62.8 m²/g after high-temperature aging at 1000°C for 10 h, and a specific surface area of 43.1 m²/g after high-temperature aging at 1100°C for 4 h.

### Example 30

250 mL mixed feed liquid of CeCl₃, ZrOCl₂, YCl₃ (50% Y)with a total metal ion molar concentration of 0.7 mol/L was prepared according to the molar ratio of cerium-zirconium composite oxide Ce_{0.184}Zr_{0.642}La_{0.028}Y_{0.146}O_{1.98}; the mixed feed liquid was mixed with 2.5 mol/L sodium hydroxide solution for precipitation reaction, the precipitation temperature was 40°C, the pH value in the precipitation process was controlled at 5-11, the pH value was adjusted twice for step-by-step precipitation, the pH value was firstly adjusted to 5 for zirconium ion precipitation, then the pH value was slowly adjusted to 11 for cerium ion and yttrium ion precipitation, the pH value at the end of precipitation was 11, the precipitate was subjected to post-treatment such as filtering, washing and the like to obtain a precursor, and then the precursor was dried at 110°C for 10 h and roasted at 800°C for 5 h to obtain cerium-containing zirconium oxide with gradient distribution.

A certain volume of mixed feed liquid of La(NO₃)₃, Y(NO₃)₃ (50% Y) with a total metal ion concentration of 1.0 mol/L was prepared according to the molar ratio of cerium-zirconium composite oxide Ce_{0.184}Zr_{0.642}La_{0.028}Y_{0.146}O_{1.98}, the mixed feed liquid of La(NO₃)₃, Y(NO₃)₃ was uniformly mixed with the cerium-containing zirconium oxide obtained above, and the mixture was dried, then heat-treated at 250°C for 4 h, then heat-treated at 450°C for 1 h, roasted at 700°C for 4 h, and roasted at 800°C for 3 h to obtain cerium-zirconium composite oxide, which has an element gradient distribution structure, wherein lanthanum oxide is enriched outside, yttrium oxide exist at external surface and inside, and La and Y exist at the grain boundary and surface in the form of oxides. The cerium-zirconium composite oxide has a total pore volume of 0.599 mL/g, and a total pore volume of 0.301 mL/g after high-temperature aging at 1000°C for 10 h. The cerium-zirconium composite oxide has a specific surface area of 63.1 m²/g after high-temperature aging at 1000°C for 10 h, and a specific surface area of 43.4 m²/g after high-temperature aging at 1100°C for 4 h.

### Example 31

250 mL mixed feed liquid of CeCl₃, ZrOCl₂with a total metal ion molar concentration of 0.8 mol/L was prepared according to the molar ratio of cerium-zirconium composite oxide Ce_{0.326}Zr_{0.569}La_{0.043}Y_{0.062}O_{1.98}; the mixed feed liquid was mixed with 2.5 mol/L sodium hydroxide solution for precipitation reaction, the precipitation temperature was 60°C, the pH value in the precipitation process was controlled at 10-14, the pH value at the end was 10, then the required LaCl₃ solution and sodium hydroxide solution were added for second-step precipitation reaction, the pH value at the end of precipitation was 10, the precipitate was subjected to post-treatment such as filtering, washing and the like to obtain a precursor, and then the precursor was dried at 110°C for 10 h and roasted at 750°C for 6 h to obtain cerium-containing zirconium oxide with a core-shell structure.

A certain volume of Y(NO₃)₃ solution with a total metal ion concentration of 1.5 mol/L was prepared according to the molar ratio of cerium-zirconium composite oxide Ce_{0.326}Zr_{0.569}La_{0.043}Y_{0.062}O_{1.98}, the Y(NO₃)₃ solution was uniformly mixed with the cerium-containing zirconium oxide obtained above, and the mixture was dried, then heat-treated at 350°C for 3 h, heat-treated at 400°C for 5 h, and then roasted at 800°C for 5 h to obtain cerium-zirconium composite oxide, which has a core-shell structure, wherein lanthanum oxide and yttrium oxide outside are enriched outside, and La and Y exist at the grain boundary and surface in the form of oxides. The cerium-zirconium composite oxide has a total pore volume of 0.573 mL/g, and a total pore volume of 0.288 mL/g after high-temperature aging at 1000°C for 10 h. The cerium-zirconium composite oxide has a specific surface area of 60.3 m²/g after high-temperature aging at 1000°C for 10 h, and a specific surface area of 42.3 m²/g after high-temperature aging at 1100°C for 4 h.

### Example 32

250 mL mixed feed liquid of CeCl₃, ZrOCl₂ with a total metal ion molar concentration of 1.0 mol/L was prepared according to the molar ratio of cerium-zirconium composite oxide Ce_{0.156}Zr_{0.763}La_{0.041}Nd_{0.040}O_{1.98}; the mixed feed liquid was mixed with 2.5 mol/L sodium hydroxide solution for precipitation reaction, the precipitation temperature was 60°C, the pH value in the precipitation process was controlled at 10-14, the pH value at the end was 11, then the required LaCl₃ solution and sodium hydroxide solution were added for the second-step precipitation reaction, the pH value at the end of precipitation was 11, the precipitate was subjected to post-treatment such as filtering, washing and the like to obtain a precursor, and then the precursor was dried at 110°C for 10 h and roasted at 850°C for 4 h to obtain cerium-containing zirconium oxide with a core-shell structure.

A certain volume of Nd(NO₃)₃solution with a total metal ion concentration of 0.8 mol/I was prepared according to the molar ratio of cerium-zirconium composite oxide Ce_{0.156}Zr_{0.763}La_{0.041}Nd_{0.040}O_{1.98}, the Nd(NO₃)₃ solution was uniformly mixed with the cerium-containing zirconium oxide obtained above, and the mixture was dried, then heat-treated at 250°C for 4 h, then heat-treated at 300°Cfor 5 h, and then roasted at 850°C for 4 h to obtain cerium-zirconium composite oxide, which has a core-shell structure, wherein neodymium oxide and lanthanum oxide outside are enriched outside, and La and Nd exist at the grain boundary and surface in the form of oxides. The cerium-zirconium composite oxide has a total pore volume of 0.598 mL/g, and a total pore volume of 0. 298 mL/g after high-temperature aging at 1000 °C for 10 h. The cerium-zirconium composite oxide has a specific surface area of 60.9 m²/g after high-temperature aging at 1000°C for 10 h, and a specific surface area of 42.9 m²/g after high-temperature aging at 1100°C for 4 h.

### Example 33

250 mL mixed feed liquid containing Ce(NO₃)₃, ZrO(NO₃)₂, Nd(NO₃)₃ (50% Nd) with a total metal ion molar concentration of 1.0 mol/L was prepared according to the molar ratio of cerium-zirconium composite oxide Ce_{0.163}Zr_{0.781}La_{0.016}Nd_{0.040}O_{1.98}; the mixed feed liquid was mixed with 3.0 mol/L ammonia solution for precipitation reaction, the precipitation temperature was 35°C, the pH value in the precipitation process was controlled at 5-10.5, the pH value was adjusted twice for step-by-step precipitation, the pH value was firstly adjusted to 5 for zirconium ion precipitation, then the pH value was slowly adjusted to 10.5 for cerium ion and neodymium ion precipitation, the pH value at the end of precipitation was 10.5, the precipitate was subjected to post-treatment such as filtering, washing and the like to obtain a precursor, and then the precursor was dried at 110°C for 10 h and roasted at 600°C for 12 h to obtain cerium-containing zirconium oxide with gradient distribution.

A certain volume of mixed feed liquid of La(NO₃)₃, Nd(NO₃)₃ (50% Nd) with a total metal ion concentration of 1.3 mol/L was prepared according to the molar ratio of cerium-zirconium composite oxide Ce_{0.163}Zr_{0.781}La_{0.016}Nd_{0.040}O_{1.98}, the mixed feed liquid of La(NO₃)₃, Nd(NO₃)₃ was uniformly mixed with the cerium-containing zirconium oxide obtained above, and the mixture was dried, then heat-treated at 250°C for 4 h, then heat-treated at 450°Cfor 1 h, and then roasted at 800°C for 5 h to obtain cerium-zirconium composite oxide, which has an element gradient distribution structure, wherein lanthanum oxide is enriched outside, neodymium oxide exist at external surface and inside, and La and Nd exist at the grain boundary and surface in the form of oxides. The cerium-zirconium composite oxide has a total pore volume of 0.593 mL/g, and a total pore volume of 0.294 mL/g after high-temperature aging at 1000°C for 10 h. The cerium-zirconium composite oxide has a specific surface area of 62.5 m²/g after high-temperature aging at 1000°C for 10 h, and a specific surface area of 43.2 m²/g after high-temperature aging at 1100°C for 4 h.

### Example 34

250 mL mixed feed liquid of Ce(NO₃)₃ (50% Ce), ZrO(NO₃)₂ with a total metal ion molar concentration of 0.7 mol/L was prepared according to the molar ratio of cerium-zirconium composite oxide Ce_{0.523}Zr_{0.365}La_{0.046}Y_{0.066}O_{1.98}; the mixed feed liquid was mixed with 3 mol/L ammonia water for precipitation reaction, the precipitation temperature was 30°C, the pH value in the precipitation process was controlled at 9-11, the pH value at the end was 11, then the required mixed feed liquid of Y(NO₃)₃, Ce(NO₃)₃ (50% Ce)and sodium hydroxide solution wre added for the second-step precipitation reaction, the pH value at the end of precipitation was 10, and the precipitate was subjected to post-treatment such as filtering, washing and the like to obtain a precursor, and then the precursor was dried at 110°C for 10 h and roasted at 700°C for 10 h to obtain cerium-containing zirconium oxide with a core-shell structure.

A certain volume of La(NO₃)₃ solution with a total metal ion concentration of 1.5 mol/L was prepared according to the molar ratio of cerium-zirconium composite oxide Ce_{0.523}Zr_{0.365}La_{0.046}Y_{0.066}O_{1.98}, the La(NO₃)₃ solution was uniformly mixed with the cerium-containing zirconium oxide obtained above, and the mixture was dried, then heat-treated at 200°C for 4 h, then heat-treated at 350°C for 4 h, then roasted at 600°C for 5 h, and then roasted at 850°C for 3 h to obtain cerium-zirconium composite oxide, which has a core-shell structure, wherein cerium oxide, lanthanum oxide and yttrium oxide are enriched outside, and La and Y exist at the grain boundary and surface in the form of oxides. The cerium-zirconium composite oxide has a total pore volume of 0.599 mL/g, and a total pore volume of 0.311 mL/g after high-temperature aging at 1000°C for 10 h. The cerium-zirconium composite oxide has a specific surface area of 63.2 m²/g after high-temperature aging at 1000°C for 10 h, and a specific surface area of 43.5 m²/g after high-temperature aging at 1100°C for 4 h.

### Example 35

250 mL mixed feed liquid of CeCl₃, ZrOCl₂ with a total metal ion molar concentration of 1.5 mol/L was prepared according to the molar ratio of cerium-zirconium composite oxide Ce_{0.48}Zr_{0.34}La_{0.04}Mg_{0.06}Mn_{0.08}O_{1.98}; the mixed feed liquid was mixed with 2.5 mol/L sodium hydroxide solution for precipitation reaction, the precipitation temperature was 35°C, the pH value in the precipitation process was controlled at 9-11, the pH value at the end was 11, then the required MgCl₃ solution and sodium hydroxide solution were added for the second-step precipitation reaction, the pH value at the end of precipitation was 10.5, the precipitate was subjected to post-treatment such as filtering, washing and the like to obtain a precursor, and then the precursor was dried at 110°C for 10 h and roasted at 800°C for 8 h to obtain cerium-containing zirconium oxide with a core-shell structure.

A certain volume of mixed feed liquid of La(NO₃)₃, Mn(NO₃)₃ with a total metal ion concentration of 0.8 mol/L was prepared according to the molar ratio of cerium-zirconium composite oxide Ce_{0.48}Zr_{0.34}La_{0.04}Mg_{0.06}Mn_{0.08}O_{1.98}, the mixed feed liquid of La(NO₃)₃, Mn(NO₃)₃ was uniformly mixed with the cerium-containing zirconium oxide obtained above, and the mixture was dried, then heat-treated at 100°C for 8 h, then heat-treated at 400°Cfor 3 h, and then roasted at 700°C for 6 h to obtain cerium-zirconium composite oxide, which has a core-shell structure, wherein manganese oxide and lanthanum oxide are enriched outside, and La, Mn and Mg exist at the grain boundary and surface in the form of oxides. The cerium-zirconium composite oxide has a total pore volume of 0.580 mL/g, and a total pore volume of 0.289 mL/g after high-temperature aging at 1000°C for 10 h. The cerium-zirconium composite oxide has a specific surface area of 61.2 m²/g after high-temperature aging at 1000°C for 10 h, and a specific surface area of 42.8 m²/g after high-temperature aging at 1100°C for 4 h.

It can be seen from the data provided in the above Examples that the total pore volume of the cerium-zirconium composite oxide obtained by the preparation method of the Examples of the invention and the total pore volume after high temperature aging at 1000°C for 10 h are significantly higher than those of the cerium-zirconium composite oxide prepared by the preparation method of Comparative Examples. The specific surface area of the cerium-zirconium composite oxide obtained by the preparation method of Examples of the invention after high-temperature aging at 1000°C for 10 h and the specific surface area after high-temperature aging at 1100°C for 4 h are higher than those of the cerium-zirconium composite oxide obtained by the preparation method of Comparative Examples. The cerium-zirconium composite oxide obtained by the preparation method of the Examples of the invention can obtain good high-temperature stability.

In conclusion, the invention relates to a cerium-zirconium composite oxide which is doped at surface and at grain boundary and a preparation method and use thereof, which improves high-temperature stability and catalytic application effect of cerium-zirconium composite oxide. The grain boundary and the surface of the cerium-zirconium composite oxide provided by the invention contain doping elements. Furthermore, the doping elements are located at the grain boundary and surface, the number of defects and vacancies of the cerium-zirconium composite oxide is increased, oxygen migration capability is increased, and the cerium-zirconium composite oxide has good high-temperature stability. In addition, the cerium-zirconium composite oxide can inhibit migration, agglomeration and growth of noble metal particles, enhance high-temperature stability of a noble metal catalyst, and can be applied to the fields of motor vehicle exhaust purification, natural gas catalytic combustion, organic waste gas purification, industrial flue gas denitrification treatment and the like.

It should be understood that the above specific embodiments of the invention are only used to illustrate or explain the principles of the invention, and do not constitute limitations of the invention. Accordingly, any modifications, equivalents, improvements, and the like that may be made without departing from the spirit and scope of the invention are intended to be included within the scope of the invention. Furthermore, the appended claims are intended to cover all changes and modifications that fall within the metes and bounds of the appended claims, or equivalents of such metes and bounds.

## Claims

1. A cerium-zirconium composite oxide which is doped at surface and at grain boundary, wherein the cerium-zirconium composite oxide has a chemical formula of CeₓZr_{1-x-y}M_{y}O_{2-α}D_{δ},
M is a cation doping element, and D is an anion doping element;
0.1≤x≤0.9, 0<y<0.2, 0≤α≤0.1, 0≤δ≤0.1.

2. The cerium-zirconium composite oxide which is doped at surface and at grain boundary according to claim 1, wherein the grain boundary and surface of the cerium-zirconium composite oxide contain an oxide of the doping element M,
or an oxide of the doping element M and one or more selected from a nitrogen-containing compound, a fluoride, a phosphate, and a sulfate, which is formed by M and D.

3. The cerium-zirconium composite oxide which is doped at surface and at grain boundary according to claim 1 or 2, wherein the doping element M is one or a combination of more than one selected from rare earth elements other than cerium, transition metal elements, alkaline-earth metal elements, Al and Si; and the doping element D is one or a combination of more than one selected from N, S, F, and P.

4. The cerium-zirconium composite oxide which is doped at surface and at grain boundary according to claim 3, wherein the rare earth element is one or a combination of more than one selected from La, Pr, Nd, Sm, Eu, Gd, Tb, Dy, Ho, Er, Tm, Yb, Lu, Y, and Sc; the transition metal element is one or a combination of more than one selected from Cu, Mn, Ni, Fe, Zn, Co, Ti, Hf, Cr, and W; and the alkaline-earth metal element is one or a combination of more than one selected from Mg, Ca, Sr, and Ba.

5. The cerium-zirconium composite oxide which is doped at surface and at grain boundary according to claim 4, wherein the cation doping element M comprises one or a combination of more than one selected from La, Pr, Nd, Sm, Eu, Yb, Y, Sc, Cu, Mn, Hf, Fe, Co, Al, Si, Mg, Ba, and Sr.

6. The cerium-zirconium composite oxide which is doped at surface and at grain boundary according to claim 1, wherein the cerium-zirconium composite oxide has specific surface area of greater than 50 m²/g, preferably greater than 60 m²/g, after heat preservation at 1000°C for 10 h; and a specific surface area of greater than 35 m²/g, preferably greater than 40 m²/g after heat preservation at 1100°C for 4 h.

7. The cerium-zirconium composite oxide which is doped at surface and at grain boundary according to any one of claims 1-5, wherein the cerium-zirconium composite oxide has a total pore volume of greater than 0.4 mL/g, and a total pore volume of greater than 0.2 mL/g after heat preservation at 1000°C for 10 h.

8. The cerium-zirconium composite oxide which is doped at surface and at grain boundary according to any one of claims 1-7, comprising an element gradient distribution structure or a core-shell structure; preferably, one or more selected from a structure in which cerium oxide is enriched on external surface or shell, or a structure in which doping element M is enriched on external surface, or a structure in which doping element M is on external surface or/and inner structure.

9. A preparation method of the cerium-zirconium composite oxide which is doped at surface and at grain boundary according to any one of claims 1-8, comprising the following steps:
S1, preparing aqueous solutions containing cerium ion and zirconium ion respectively in a stoichiometric ratio required by the product, and mixing the aqueous solutions to obtain a mixed feed liquid; carrying out one-step or two-step precipitation reaction on the mixed feed liquid and an alkaline substance in a reactor, and filtering, washing, drying and roasting the obtained precipitate to obtain cerium-containing zirconium oxide; and
S2, mixing the cerium-containing zirconium oxide obtained in step S1 with liquid salts of the doping elements M and D, drying, then carrying out heat treatment once or twice, and then roasting once or twice to obtain the cerium-zirconium composite oxide which is doped at surface and at grain boundary.

10. The method according to claim 9, wherein the aqueous solution containing zirconium ion in step S1 comprises one or a combination of more than one selected from zirconium oxychloride, zirconium oxynitrate, zirconium sulfate, zirconium acetate, and zirconium citrate.

11. The method according to claim 9, wherein the aqueous solution containing cerium ion in step S1 comprises one or a combination of more than one selected from cerium chloride, cerium nitrate, cerium sulfate, cerium acetate, and cerium citrate.

12. The method according to claim 9, wherein the alkaline substance comprises at least one of magnesium bicarbonate, urea, and a hydroxide, carbonate, or bicarbonate of at least one of ammonium, sodium, and potassium; preferably at least one of sodium hydroxide, urea, ammonia water, and ammonium bicarbonate.

13. The method according to claim 9, wherein pH value in the precipitation process of step S1 is controlled at 4.5-14, preferably 5-11; pH value at the end of precipitation is controlled at 8-13, preferably 9-11; and reaction temperature in the precipitation process is 0-120°C, preferably 20-80°C.

14. The method according to claim 9, wherein the liquid salt of doping element M comprises one or a combination of more than one selected from molten salts or aqueous solutions of chloride, nitrate, sulfate, acetate, citrate, amino acid salt, and organosilicon compound.

15. The method according to claim 9, wherein the doping element M is added in one or both of the steps S1 and S2.

16. The method according to claim 9, wherein the doping element D is added in one or both of the steps S1 and S2.

17. The method according to claim 16, wherein the doping element D is added by one or a combination of more than one selected from nitrate, fluoride, phosphate, and sulfate.

18. The method according to claim 9, wherein the roasting in step S1 is performed at a temperature of 500 to 1050°C for 1 to 24 h; preferably, the roasting is performed at a temperature of 600 to 950°C for 3 to 12 h.

19. The method according to claim 9, wherein the heat treatment in step S2 is performed at a temperature of 100 to 600°C for 0.5 to 24 h; preferably, the heat treatment is performed at a temperature of 150 to 450°C for 1 to 12 h.

20. The method according to claim 9, wherein the roasting in step S2 is performed at a temperature of 500 to 1050°C for 1 to 24 h; preferably, the roasting is performed at a temperature of 600 to 950°C for 3 to 12 h.

21. A catalyst, which is prepared from the cerium-zirconium composite oxide which is doped at surface and at grain boundary according to any one of claims 1-8.

22. Use of the catalyst according to claim 21 in the fields of motor vehicle exhaust purification, natural gas catalytic combustion, organic waste gas purification, and industrial flue gas denitrification treatment.
